(19) **Europäisches Patentamt**
**European Patent Office**
**Office européen des brevets**

(11) **EP 3 311 121 B1**

(12) **EUROPÄISCHE PATENTSCHRIFT**

(45) Veröffentlichungstag und Bekanntmachung des Hinweises auf die Patenterteilung:
**16.10.2019 Patentblatt 2019/42**

(21) Anmeldenummer: **16728944.6**

(22) Anmeldetag: **13.06.2016**

(51) Int Cl.:
**G01D 18/00** (2006.01)    **G01B 7/30** (2006.01)

(86) Internationale Anmeldenummer:
**PCT/EP2016/063499**

(87) Internationale Veröffentlichungsnummer:
**WO 2016/202741 (22.12.2016 Gazette 2016/51)**

(54) **VORRICHTUNG UND VERFAHREN ZUM PLAUSIBILISIEREN VON SIGNALEN EINES DREHWINKELGEBERS**

DEVICE AND METHOD FOR TESTING THE PLAUSIBILITY OF SIGNALS OF A ROTARY ENCODER

DISPOSITIF ET PROCÉDÉ POUR VÉRIFIER LA PLAUSIBILITÉ DES SIGNAUX D'UN CAPTEUR D'ANGLE DE ROTATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.06.2015 DE 102015211259**

(43) Veröffentlichungstag der Anmeldung:
**25.04.2018 Patentblatt 2018/17**

(73) Patentinhaber: **Robert Bosch GmbH**
**70442 Stuttgart (DE)**

(72) Erfinder:
• **UNGERMANN, Michael**
**64285 Darmstadt (DE)**
• **LECHNER, Benjamin**
**75242 Neuhausen (DE)**
• **ZIRKEL, Daniel**
**75446 Wiernsheim-Serres (DE)**
• **RAICHLE, Daniel**
**71665 Vaihingen (DE)**

(56) Entgegenhaltungen:
**EP-A- 2 562 516        DE-A1-102008 022 979**
**DE-A1-102011 079 116    US-A1- 2009 206 828**
**US-A1- 2012 185 213**

EP 3 311 121 B1

**Beschreibung**

Die vorliegende Erfindung betrifft eine Vorrichtung und ein Verfahren zum Plausibilisieren von Signalen eines Drehwinkelgebers, insbesondere für einen Drehwinkel eines Rotors einer elektrischen Maschine. Insbesondere betrifft die vorliegende Erfindung eine Vorrichtung und ein Verfahren zum Plausibilisieren der Ausgangssignale eines Drehwinkelgebers wie zum Beispiel eines Resolvers.

Stand der Technik

Elektro- und Hybridfahrzeuge gewinnen zunehmend an Bedeutung. Zur Regelung von permanenterregten Synchronmaschinen (PSM) und elektrisch erregten Synchronmaschinen (ESM) wie sie in solchen Fahrzeugen eingesetzt werden, ist die Kenntnis des Rotorlagewinkels derartiger Maschinen erforderlich. Weiterhin ist zur Regelung von Asynchronmaschinen (ASM) die Kenntnis der elektrischen Frequenz des Antriebs notwendig. Zur Ermittlung des Rotorlagewinkels bzw. der elektrischen Frequenz können verschiedene Sensorarten eingesetzt werden. Zum Beispiel sind Sensoren auf Basis des Wirbelstrom-Effekts, Resolver oder digitale Winkelgeber möglich.

Ein Resolver wird dabei beispielsweise mit einem sinusförmigen Trägersignal angeregt. Als Empfängersignale des Resolvers erhält man dabei in der Regel gestörte, amplitudenmodulierte Spannungen, aus deren Einhüllenden die Information über die Rotorlage gewonnen werden kann.

Vorrichtungen zum Erfassen von Drehwinkeln, welche im Folgenden als Drehwinkelgeber bezeichnet werden, nutzen häufig Sinussignale, welche proportional zu einem Sinus $\sin(\varphi(t))$ des zeitabhängigen Drehwinkels $\varphi(t)$ sind und/oder Kosinussignale, welche proportional zu einem Kosinus $\cos(\varphi(t))$ des Drehwinkels sind, oder diese Signale in der Signalverarbeitung nutzen, um den Drehwinkel zu berechnen.

Die deutsche Patentanmeldung DE 10 2011 078 583 A1 offenbart beispielsweise eine Auswertung von Resolver-Sensorsignalen in einem Fahrzeug. Ein Resolver-Sensor nimmt hierzu eine Drehbewegung eines Rotors auf, und ein Prozessorelement verarbeitet die sinus- bzw. kosinusförmigen Ausgangsspannungen des Resolvers.

Bei einem Resolver kann aus den Ausgangsspannungen aus den Statorwicklungen auf die Winkellage des Rotors geschlossen werden. Konventionelle Auswerteschaltungen stellen dabei an die Güte der Empfängersignale aus den Statorwicklungen explizite und implizite Anforderungen.

Haben ein solches Sinussignal und ein solches Kosinussignal unterschiedliche Amplituden, kann dies beispielsweise bei einem Berechnen des Drehwinkels, das heißt der Winkellage, mittels eines Arcustangens zu einem Fehler bei der Drehwinkelberechnung führen.

Die DE102011079116A1 offenbart ein Verfahren zum Überprüfen der Plausibilität der Ausgangssignale eines Resolvers.

Es besteht daher ein Bedarf nach einem Verfahren und einer Vorrichtung zum Ermitteln und Plausibilisieren einer Amplitudendifferenz der Sinus- und Kosinussignale.

Offenbarung der Erfindung

Hierzu schafft die vorliegende Erfindung eine Vorrichtung mit den Merkmalen des Patentanspruchs 1 und ein Verfahren mit den Merkmalen des Patentanspruchs 6.

Demgemäß ist eine Vorrichtung zum Plausibilisieren von Signalen eines Drehwinkelgebers vorgesehen, mit: einer Sinussignal-Bereitstellungseinrichtung, welche dazu ausgelegt ist, ein Sinussignal des Drehwinkelgebers, welches eine Sinusfunktion $\sin(\varphi(t))$ eines zeitabhängigen Drehwinkels $\varphi(t)$ indiziert, bereitzustellen; einer Kosinussignal-Bereitstellungseinrichtung, welche dazu ausgelegt ist, ein Kosinussignal des Drehwinkelgebers, welches eine Kosinusfunktion $\cos(\varphi(t))$ eines zeitabhängigen Drehwinkels $\varphi(t)$ indiziert, bereitzustellen; einer Recheneinrichtung, welche dazu ausgelegt ist, ein Berechnungssignal basierend auf dem bereitgestellten Sinussignal und dem bereitgestellten Kosinussignal zu bilden; einer Maximalwert-Bestimmungseinrichtung, welche dazu ausgelegt ist, einen Maximalwert des Berechnungssignals zu bestimmen; einer Minimalwert-Bestimmungseinrichtung, welche dazu ausgelegt ist, einen Minimalwert des Berechnungssignals zu bestimmen; einer Bestimmungseinrichtung, welche dazu ausgelegt ist, ein Differenzsignal, welches eine Amplitudendifferenz zwischen einer Amplitude des Sinussignals und einer Amplitude des Kosinussignals indiziert, als oder basierend auf einem Betrag einer Differenz zwischen dem bestimmten Maximalwert und dem bestimmten Minimalwert zu bestimmen; und einer Plausibilisierungseinrichtung, welche dazu ausgelegt ist, das Sinussignal und das Kosinussignal zu plausibilisieren, falls das Differenzsignal innerhalb eines vorbestimmten Bereichs liegt.

Der Drehwinkel kann insbesondere der Rotorlagewinkel eines Rotors einer Synchronmaschine sein. Unter einem Plausibilisieren ist insbesondere ein Einstufen eines Werts eines ermittelten Signals als plausibel, das heißt als zuverlässig und/oder als auf korrekten Messungen beruhend, zu verstehen. Bei einem weiteren Verarbeiten des ermittelten Signals werden vorzugsweise nur solche Werte des Signals berücksichtigt, welche als plausibel eingestuft wurden. Das Plausibilisieren kann ein Ausgeben eines Signals, welches die Plausibilität des ermittelten Signal indiziert, umfassen.

Die Erfindung stellt weiterhin ein Verfahren zum Plausibilisieren von Signalen eines Drehwinkelgebers bereit, mit den Schritten: Bereitstellen eines Sinussignals des Drehwinkelgebers, welches eine Sinusfunktion $\sin(\varphi(t))$ eines zeitabhängigen Drehwinkels $\varphi(t)$ indiziert; Bereitstellen eines Kosinussignals des Drehwinkelgebers, welches eine Kosinusfunktion $\cos(\varphi(t))$ des zeitabhängigen Drehwinkels $\varphi(t)$ indiziert; Bilden eines Berechnungssignals basierend auf dem bereitgestellten Sinussignal und dem bereitgestellten Kosinussignal; Bestimmen eines Maximalwerts des Berechnungssignals; Bestimmen eines Minimalwerts des Berechnungssignals; Bestimmen eines Differenzsignals, welches eine Amplitudendifferenz zwischen einer Amplitude des Sinussignals und einer Amplitude des Kosinussignals indiziert, als oder basierend auf einem Betrag einer Differenz zwischen dem Maximalwert und dem Minimalwert; und Plausibilisieren des Sinussignals und des Kosinussignals, falls das Differenzsignal innerhalb eines vorbestimmten Bereichs liegt.

Unter einem Bereitstellen eines Sinus- oder Kosinussignals kann insbesondere ein Empfangen oder ein Erzeugen eines Sinus- bzw. Kosinussignals verstanden werden.

Das Verfahren kann insbesondere kontinuierlich, beispielsweise einmal pro Periode des Sinus- und/oder Kosinussignals durchgeführt werden.

Vorteile der Erfindung

Die der Erfindung zugrunde liegende Erkenntnis besteht darin, dass eine Berechnung und/oder ein Plausibilisieren einer Amplitudendifferenz zwischen dem Sinussignal und dem Kosinussignal eines Drehwinkelgebers auf einem einzelnen Berechnungssignal, welches eine Funktion sowohl des Sinussignals als auch des Kosinussignals ist, basieren kann.

Erfindungsgemäß kann direkt nach dem Zurücklegen einer elektrischen Periode durch einen Rotor einer Drehmaschine, insbesondere einer Synchronmaschine, ein Wert für die Amplitudendifferenz zwischen einer Amplitude des Sinussignals und einer Amplitude des Kosinussignals vorliegen, ohne dass diese Amplituden einzeln geschätzt oder gelernt werden müssen. Da keine aufwändigen Schätzverfahren durchgeführt werden müssen, ist das erfindungsgemäße Verfahren somit besonders schnell durchführbar.

Vorteilhafte Ausführungsformen und Weiterbildungen ergeben sich aus den Unteransprüchen sowie aus der Beschreibung unter Bezugnahme auf die Figuren.

Gemäß einer vorteilhaften Weiterbildung sind die Maximalwert-Bestimmungseinrichtung und die Minimalwert-Bestimmungseinrichtung dazu ausgelegt, den Maximalwert und den Minimalwert innerhalb einer vorbestimmten Zeitspanne des Sinussignals und des Kosinussignals und/oder innerhalb einer vorbestimmten Anzahl von vollständigen elektrischen Umdrehungen des Rotors zu bestimmen. Insbesondere können die Maximalwert-Bestimmungseinrichtung und die Minimalwert-Bestimmungseinrichtung dazu ausgelegt sein, den Maximalwert und den Minimalwert innerhalb einer Periodendauer des Sinussignals und des Kosinussignals und/oder innerhalb genau einer vollständigen elektrischen Umdrehung des Rotors zu bestimmen. Somit ist eine besonders schnelle Plausibilisierung der Amplitudendifferenz möglich.

Gemäß einer weiteren vorteilhaften Weiterbildung basiert das Berechnungssignal auf dem Quadrat des Sinussignals und auf dem Quadrat des Kosinussignals. Gemäß einer weiteren vorteilhaften Weiterbildung ist die Recheneinrichtung dazu ausgelegt, das Berechnungssignal basierend auf einer Summe des Quadrats des Sinussignals und des Quadrats des Kosinussignals, oder basierend auf einer Wurzel aus der genannten Summe, zu bestimmen. Gemäß einer weiteren vorteilhaften Weiterbildung ist die Recheneinrichtung dazu ausgelegt, das Berechnungssignal als Wurzel aus der Summe des Quadrats des Sinussignals und des Quadrats des Kosinussignals zu bestimmen. Somit ist ein aussagekräftiges Berechnungssignal mit für die Plausibilisierung ausreichendem Inhalt mit geringem technischen Aufwand erzeugbar.

Gemäß einer vorteilhaften Weiterbildung des erfindungsgemäßen Verfahrens werden der Maximalwert und der Minimalwert innerhalb einer vorbestimmten Zeitspanne des Sinussignals und des Kosinussignals und/oder innerhalb einer vorbestimmten Anzahl von vollständigen elektrischen Umdrehungen des Rotors bestimmt. Insbesondere können der Maximalwert und der Minimalwert innerhalb einer Periodendauer des Sinussignals und des Kosinussignals und/oder innerhalb genau einer vollständigen elektrischen Umdrehung des Rotors bestimmt werden.

Gemäß einer weiteren vorteilhaften Weiterbildung basiert das Berechnungssignal auf dem Quadrat des Sinussignals und auf dem Quadrat des Kosinussignals. Gemäß einer weiteren vorteilhaften Weiterbildung basiert das Berechnungssignal auf einer Wurzel aus einer Summe des Quadrats des Sinussignals und des Quadrats des Kosinussignals oder ist der Wurzel aus der Summe des Quadrats des Sinussignals und des Quadrats des Kosinussignals gleich.

Kurze Beschreibung der Zeichnungen

Die vorliegende Erfindung wird nachfolgend anhand der in den schematischen Figuren der Zeichnungen dargestellten Ausführungsbeispiele näher erläutert. Es zeigen:

Fig. 1 ein schematisches Blockschaltbild eines elektrischen Antriebssystems gemäß einer Ausführungsform der vorliegenden Erfindung;

Fig. 2 eine schematische Darstellung einer Vorrichtung zum Plausibilisieren von Signalen eines Drehwinkelgebers gemäß einer weiteren Ausführungsform der vorliegenden Erfindung; und

Fig. 3 ein schematisches Flussdiagramm zum Erläutern eines Verfahrens zum Plausibilisieren von Signalen eines Drehwinkelgebers gemäß noch einer weiteren Ausführungsform der vorliegenden Erfindung.

In allen Figuren sind gleiche bzw. funktionsgleiche Elemente und Vorrichtungen - sofern nichts anderes angegeben ist - mit denselben Bezugszeichen versehen. Die Nummerierung von Verfahrensschritten dient der Übersichtlichkeit und soll insbesondere nicht, sofern nichts anderes angegeben ist, eine bestimmte zeitliche Reihenfolge implizieren. Insbesondere können auch mehrere Verfahrensschritte gleichzeitig durchgeführt werden.

Beschreibung der Ausführungsbeispiele

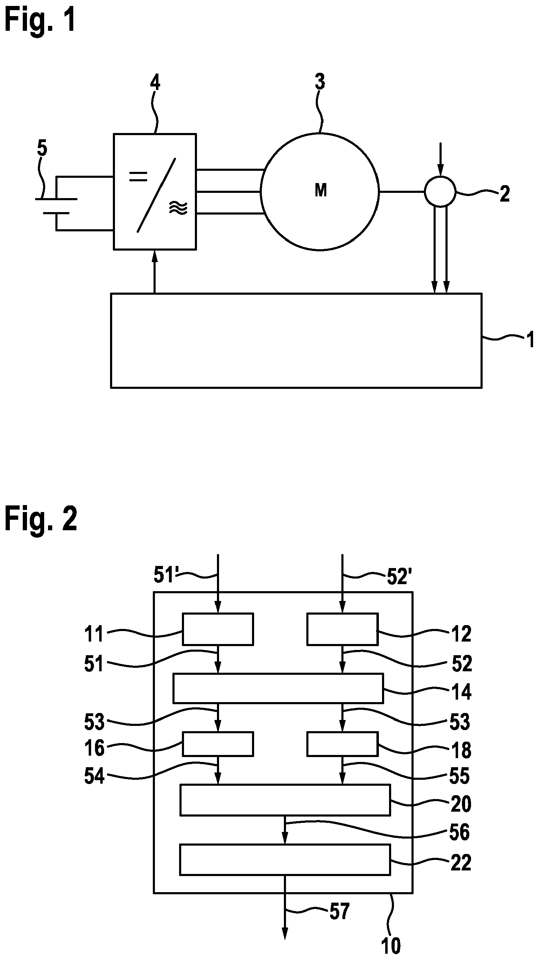

Fig. 1 zeigt ein schematisches Blockschaltbild eines elektrischen Antriebssystems gemäß einer Ausführungsform. Eine elektrische Maschine 3 wird von einer elektrischen Energiequelle 5 über einen Stromrichter 4 gespeist. Beispielsweise kann sich bei der elektrischen Energiequelle 5 um eine Traktionsbatterie eines Elektrofahrzeugs handeln. Bei der elektrischen Maschine 3 kann es sich beispielsweise um eine permanent erregte Synchronmaschine, eine elektrische erregte Synchronmaschine oder aber auch um eine Asynchronmaschine handeln. Grundsätzlich sind darüber hinaus auch andere elektrische Maschinen möglich. Die hier dargestellte Ausführungsform einer dreiphasigen elektrischen Maschine 3 stellte dabei nur eine beispielhafte Ausführungsform dar. Darüber hinaus sind auch elektrische Maschinen mit einer von drei abweichenden Anzahl von Phasen möglich. Der Stromrichter 4 konvertiert die von der elektrischen Energiequelle 5 bereitgestellte elektrische Energie und stellt die konvertierte elektrische Energie zur Ansteuerung der elektrischen Maschine 3 bereit. Die Ansteuerung der elektrischen Maschine 3 kann dabei basierend auf Vorgaben bzw. Steuersignalen von einer Steuervorrichtung 1 erfolgen. Darüber hinaus kann beim Abbremsen der elektrischen Maschine 3 auch kinetische Energie durch die elektrische Maschine 3 in elektrische Energie umgewandelt werden und diese elektrische Energie über den Stromrichter 4 in einen elektrischen Energiespeicher der Energiequelle 5 eingespeist werden.

Für die Regelung einer permanent- oder elektrisch erregten Synchronmaschine ist die Kenntnis der Lage des Rotors in dieser Maschine erforderlich. Ferner ist für die Regelung von Asynchronmaschinen die Kenntnis der elektrischen Frequenz einer solchen Maschine notwendig. Hierzu kann die elektrische Maschine 3 mit einem Drehwinkelgeber 2 gekoppelt werden. Beispielsweise kann der Drehwinkelgeber 2 mit der Antriebsachse der elektrischen Maschine 3 gekoppelt werden. Beispielsweise sind zur Bestimmung der Rotorlage und/oder der elektrischen Frequenz der Maschine 3 Sensoren auf Basis des Wirbelstrom-Effekts, digitale Winkelgebersignale oder sogenannte Resolver möglich.

In einem Resolver sind in der Regel in einem Gehäuse zwei elektrisch um 90° versetzte Statorwicklungen angeordnet, die einen in dem Gehäuse gelagerten Rotor mit einer Erregerwicklung umschließen. Grundsätzlich sind verschiedene Alternativen zur Ermittlung der Winkellage möglich, von denen nachfolgend exemplarisch eine Möglichkeit beschrieben wird. Beispielsweise kann die Rotorwicklung mit einer sinusförmigen Wechselspannung angeregt werden. Die Amplituden der in den beiden Statorwicklungen induzierten Spannungen sind dabei abhängig von der Winkellage des Rotors und indizieren den Sinus der Winkellage des Rotors (Ur-Sinussignal) und den Kosinus der Winkellage des Rotors (Ur-Kosinussignal). In dem Ur-Sinussignal und dem Ur-Kosinussignal sind die durch die erregende Wechselspannung induzierten elektrischen Schwingungen durch die Bewegung des Rotors amplitudenmoduliert. Somit kann durch Demodulieren des Ur-Sinussignals und der Ur-Kosinussignals die Winkellage des Rotors aus dem Arkustangens (arctan) der Einhüllenden der Signale der beiden Statorwicklungen berechnet werden.

Die Ermittlung der Winkellage des Rotors bzw. der elektrischen Frequenz erfolgt dabei in der Steuervorrichtung 1. Zur Plausibilisierung werden die Signale wie nachfolgend beschrieben verarbeitet. Die Steuervorrichtung 1 umfasst dazu eine erfindungsgemäße Vorrichtung 10 zum Plausibilisieren von Signalen des Drehwinkelgebers 2, wie sie anhand von Fig. 2 näher erläutert wird.

Fig. 2 zeigt eine schematische Darstellung einer Vorrichtung 10 zum Plausibilisieren von Signalen eines Drehwinkelgebers 2.

Das Sinussignal 51 des Drehwinkelgebers 2 wird durch eine Sinussignal-Bereitstellungseinrichtung 11 und das Kosinussignal 52 des Drehwinkelgebers 2 wird durch eine Kosinussignal-Bereitstellungseinrichtung 12 der Vorrichtung 10 bereitgestellt. Insbesondere falls es sich bei dem Drehwinkelgeber 2 um einen Resolver handelt, kann eine Demodulation der Sensorsignale, d.h. des Ur-Sinussignals 51' und des Ur-Kosinussignals 52' durch die Sinussignal-Bereitstellungseinrichtung 11 und die Kosinussignal-Bereitstellungseinrichtung 12 durchgeführt werden.

Die Sinussignal-Bereitstellungseinrichtung 11 und die Kosinussignal-Bereitstellungseinrichtung 12 können jeweils einen Analog-Digital-Wandler umfassen. Falls ein analoges moduliertes Ur-Sinussignal 51' bzw. ein analoges moduliertes Ur-Kosinussignal 52' eines Resolvers durch die Sinussignal-Bereitstellungseinrichtung 11 und die Kosinussignal-Bereitstellungseinrichtung 12 empfangen werden, kann durch die Sinussignal-Bereitstellungseinrichtung 11 und die Kosinussignal-Bereitstellungseinrichtung 12 jeweils erst ein Analog-zu-Digital-Wandeln und dann ein digitales Demodulieren durchgeführt werden, oder zunächst ein analoges Demodulieren des Ur-Sinussignals 51' bzw. des Ur-Kosinussignals 52' und ein jeweils anschließendes Analog-zu-Digital-Wandeln durchgeführt werden. Es kann auch ein einziger Analog-Digital-Wandler sowohl von der Sinussignal-Bereitstellungseinrichtung 11 als auch von der Kosinussignal-Bereitstellungseinrichtung 12 verwendet werden. Der oder die Analog-Digital-Wandler können dazu ausgelegt sein, die analogen Sensorsignale 51', 52' von dem Drehwinkelgeber 2 mit einer fest vorgegebenen Abtastfrequenz sowie einer vorbestimmten Auflösung abzutasten und in ein digitales Signal zu konvertieren.

Alternativ kann auch jeweils ein bereits demoduliertes Ur-Sinussignal 51' bzw. Ur-Kosinussignal 52', etwa von einem Rotorlagegeber als Drehwinkelgeber 2, durch die Sinussignal-Bereitstellungseinrichtung 11 und die Kosinussignal-Bereitstellungseinrichtung 12 empfangen werden und der Vorrichtung 10 entsprechend als Sinussignal 51 und als Kosinussignal 52 bereitgestellt werden. Die Sinussignal-Bereitstellungseinrichtung 11 und die Kosinussignal-Bereitstellungseinrichtung 12 können über einen jeweiligen oder einen gemeinsamen Analog-zu-Digital-Wandler verfügen, um ein etwaiges analoges demoduliertes Ur-Sinussignal 51' in ein digitales Sinussignal 51 und ein analoges demoduliertes Ur-Kosinussignal 52' in ein digitales Kosinussignal 52 umzuwandeln und der Vorrichtung 10 bereitzustellen.

Alternativ können die Sinussignal-Bereitstellungseinrichtung 11 und die Kosinussignal-Bereitstellungseinrichtung 12 auch dazu ausgebildet sein, das Sinussignal 51 bzw. das Kosinussignal 52 zu erzeugen, etwa in dem der Drehwinkelgeber 2, die Sinussignals-Bereitstellungseinrichtung 11 und die Kosinussignal-Bereitstellungseinrichtung 12 miteinander integriert ausgebildet sind.

Mit anderen Worten können die von der Sinussignal-Bereitstellungseinrichtung 11 und von der Kosinussignal-Bereitstellungseinrichtung 12 empfangenen Sensorsignale 51', 52', basierend auf welchen das Sinussignal 51 und das Kosinussignal 52 bereitgestellt werden, beispielsweise analoge demodulierte Signale, analoge modulierte Signale oder digitale Signale sein. Die Sensorsignale 51' und 52' können insbesondere dem Sinus bzw. dem Kosinus des Drehwinkels proportional sein.

Wird das Sinussignal 51 als $U_{Sin}(\varphi(t))$ und das Kosinussignal 52 als $U_{cos}(\varphi(t))$ bezeichnet, kann das Sinussignal 51 als

$$U_{Sin}\big(\varphi(t)\big) = U_{SinAmp}\, sin\big(\varphi(t)\big)$$

beschrieben werden, wobei $U_{SinAmp}$ eine Amplitude des Sinussignals 51 darstellt, und das Kosinussignal 52 als

$$U_{Cos}\big(\varphi(t)\big) = U_{CosAmp}\, cos\big(\varphi(t)\big)$$

beschrieben werden, wobei $U_{CosAmp}$ eine Amplitude des Kosinussignals 52 darstellt.

Daraufhin wird durch eine Recheneinrichtung 14 ein Berechnungssignal 53 basierend auf dem bereitgestellten Sinussignal 51 und dem bereitgestellten Kosinussignal 52 gebildet.

Insbesondere wird zunächst durch eine Sinussignal-Quadriereinheit der Recheneinrichtung 14 das Sinussignal 51 quadriert und durch eine Kosinussignal-Quadriereinheit der Recheneinrichtung 14 das Kosinussignal 52 quadriert. Das quadrierte Sinussignal und das quadrierte Kosinussignal werden durch eine Addiereinheit der Recheneinrichtung 14 addiert und zum Ausgeben an eine Ausgabeeinheit der Recheneinrichtung 14 als Berechnungssignal 53 übermittelt.

Alternativ kann vorgesehen sein, dass das Ergebnis der Addiereinheit statt an die Ausgabeeinheit an eine Wurzelbildungseinheit der Recheneinrichtung 14 weitergleitet wird. Die Wurzelbildungseinheit ist dazu ausgelegt, eine Wurzel aus dem Ergebnis der Addiereinheit zu ziehen und ein Ergebnis des Ziehens der Wurzel zur Ausgabe als Berechnungssignal 53 an die Ausgabeeinheit der Recheneinrichtung 14 zu übermitteln. Da die Wurzel eine streng monotone Funktion ist, ist die Wurzel eines Ausdrucks extremal, wenn der Ausdruck selbst extremal ist. Statt der Wurzelbildungseinheit kann eine allgemeine Funktionsbildungseinheit vorgesehen sein. Die Funktionsbildungseinheit kann dazu ausgelegt sein, eine monotone, insbesondere streng monotone Funktion des Ergebnisses der Addiereinheit zu bilden und an die Ausgabeeinheit zu übermitteln. Die Wurzelbildungseinheit kann als Spezialfall der Funktionsbildungseinheit betrachtet werden.

Wird das Berechnungssignal 53 als $U_{Sincos}(\varphi(t))$ bezeichnet, kann das durch die Ausgabeeinheit ausgegebene Berechnungssignal 53 somit die Form

$$U_{SinCos}\big(\varphi(t)\big) = U_{Sin}\big(\varphi(t)\big)^2 + U_{Cos}\big(\varphi(t)\big)^2$$

oder, alternativ, die Form

$$U_{SinCos}\big(\varphi(t)\big) = \sqrt{U_{Sin}\big(\varphi(t)\big)^2 + U_{Cos}\big(\varphi(t)\big)^2}$$

annehmen.

Durch eine Maximalwert-Bestimmungseinrichtung 16 der Vorrichtung 10 wird ein Maximalwert 54 des Berechnungssignals 53 bestimmt, insbesondere innerhalb mindestens einer Periodendauer des Sinussignals 51 und des Kosinussignals 52, bevorzugt innerhalb eines ganzzahligen Vielfachen einer Periodendauer des Sinussignals 51 und des Kosinussignals 52, besonders bevorzugt innerhalb genau einer Periodendauer des Sinussignals 51 und des Kosinussignals 52. Durch eine Minimalwert-Bestimmungseinrichtung 18 wird ein Minimalwert 55 des Berechnungssignals 53 bestimmt, insbesondere so wie in Bezug auf die Maximalwert-Bestimmungseinrichtung 16 beschrieben.

Der Maximalwert-Bestimmungseinrichtung 16 und der Maximalwert-Bestimmungseinrichtung 18 können zum Bestimmen des Maximalwerts 54 und des Minimalwerts 55 Informationen über den Drehwinkel und/oder über eine Periode des Rotors übermittelt werden, beispielsweise durch die Steuervorrichtung 1.

Mittels einer Bestimmungseinrichtung 20 wird ein Differenzsignal 56 bestimmt, welches eine Amplitudendifferenz zwischen der Amplitude $U_{SinAmp}$ des Sinussignals 51 und der Amplitude $U_{CosAmp}$ des Kosinussignals 52 indiziert. Das Differenzsignal 56 basiert auf, oder ist gleich, einem Betrag einer Differenz zwischen dem bestimmten Maximalwert 54 und dem bestimmten Minimalwert 55.

Somit kann das Differenzsignal 56, wenn es als $U_{AmpDiff}$ bezeichnet wird, durch die Bestimmungseinrichtung 20 innerhalb einer n-ten Periode des Rotors, dessen Drehwinkel zu bestimmen ist, als

$$U_{AmpDiff}(t) = \left| \max_{\varphi(t)\in[2\pi n, 2\pi(n+1)]}(U_{SinCos}(t)) - \min_{\varphi(t)\in[2\pi n, 2\pi(n+1)]}(U_{SinCos}(t)) \right|$$

aus dem Berechnungssignal $U_{SinCos}$ bestimmt werden.

Alternativ kann das Differenzsignal 56 als Betrag der Differenz zwischen dem bestimmten Maximalwert 54 und dem bestimmten Minimalwert 55, geteilt durch den Mittelwert des Maximalwerts 54 und des Minimalwerts 55 bestimmt werden. Das Differenzsignal 56 kann auch als Betrag der Differenz zwischen dem bestimmten Maximalwert 54 und dem bestimmten Minimalwert 55, geteilt durch den Minimalwert 54 bestimmt werden. Diese beiden Varianten sind vorteilhaft, falls für den Drehwinkelgeber 2 nicht eine Amplitudendifferenz, sondern ein Amplitudenverhältnis spezifiziert wird.

Das Differenzsignal 56 wird durch die Bestimmungseinrichtung 20 an eine Plausibilisierungseinrichtung 22 übermittelt, welche dazu ausgelegt ist, das Sinussignal 51 und das Kosinussignal 52 zu plausibilisieren, falls das Differenzsignal 56 innerhalb eines vorbestimmten Bereichs liegt. Insbesondere kann die Plausibilisierungseinrichtung 22 dazu ausgebildet sein, das Sinussignal 51 und das Kosinussignal 52 zu plausibilisieren, falls der Wert des Differenzsignals 56 unterhalb einer Schwelle $\sigma_{AmpDiff}$ liegt.

Werden das Sinussignal 51 und das Kosinussignal 52 plausibilisiert, kann durch die Plausibilisierungseinrichtung 22 ein Plausibilitätssignal 57 ausgegeben werden, welches indiziert, dass das Sinussignal 51 und das Kosinussignal 52 plausibel sind, beispielweise durch die Ausgabe einer logischen Eins. Sind diese nicht plausibel, kann das Plausibilitätssignal 57 indizieren, dass das Sinussignal 51 und das Kosinussignal 52 nicht plausibel sind, beispielsweise durch die Ausgabe einer logischen Null.

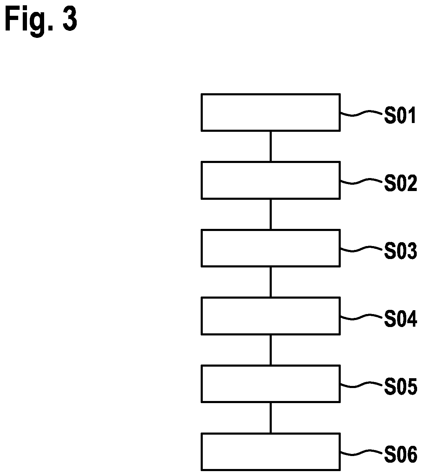

Fig. 3 zeigt ein schematisches Flussdiagramm zum Erläutern eines Verfahrens zum Plausibilisieren von Signalen eines Drehwinkelgebers gemäß noch einer weiteren Ausführungsform der vorliegenden Erfindung. Das Verfahren gemäß Fig. 3 ist insbesondere mit einer Vorrichtung gemäß Fig. 2 ausführbar und kann in Hinsicht auf alle im Zusammenhang mit der erfindungsgemäßen Vorrichtung beschriebenen Varianten und Weiterbildungen angepasst werden und umgekehrt.

In einem Schritt S01 wird ein Sinussignal 51 des Drehwinkelgebers 2 empfangen oder erzeugt, welches eine Sinusfunktion $\sin(\varphi(t))$ eines zeitabhängigen Drehwinkels $\varphi(t)$ umfasst oder indiziert. In einem Schritt S02 wird parallel ein Kosinussignal 52 des Drehwinkelgebers 2 empfangen oder erzeugt, welches eine Kosinusfunktion $\cos(\varphi(t))$ des zeitabhängigen Drehwinkels $\varphi(t)$ umfasst oder indiziert. In einem Schritt S03 wird ein Berechnungssignal 53 basierend auf dem empfangenen oder erzeugten Sinussignal 51 und dem empfangenen oder erzeugten Kosinussignal 52 bestimmt, insbesondere berechnet wie in Bezug auf Fig. 2 beschrieben.

In einem Schritt S04 wird ein Maximalwert 54 des Berechnungssignals 53 bestimmt. In einem Schritt S05 wird ein Minimalwert 55 des Berechnungssignals 53 bestimmt. Das Berechnen des Maximal- und des Minimalwerts 54, 55 erfolgt vorteilhaft jeweils wie oben in Bezug auf die Vorrichtung beschrieben. Insbesondere werden je ein Maximum und je ein Minimum innerhalb einer vollständigen elektrischen Umdrehung des Resolvers, ermittelt. Zum Bestimmen des Maximal- und des Minimalwerts 54, 55 kann auch in bekannter Weise eine Extrapolation und/oder eine Interpolation des Berechnungssignals 53 durchgeführt werden.

In einem Schritt S06 wird ein Differenzsignal 56 bestimmt, welches eine Amplitudendifferenz zwischen der Amplitude $U_{SinAmp}$ des Sinussignals 51 und einer Amplitude $U_{CosAmp}$ des Kosinussignals 52 indiziert, als, oder basierend auf, einem Betrag einer Differenz zwischen dem Maximalwert 54 und dem Minimalwert 55. In einem Schritt S07 werden das Sinussignal 51 und das Kosinussignal 52 plausibilisiert, falls das Differenzsignal 56 innerhalb eines vorbestimmten Bereichs, insbesondere unter einer vorbestimmten Schwelle, liegt.

In einem optionalen weiteren Schritt kann ein Plausibilitätssignal 57 ausgegeben werden, welches indiziert, dass das Sinussignal 51 und das Kosinussignal 52 plausibel sind, beispielsweise durch die Ausgabe einer logischen Eins. Sind diese nicht plausibel, kann das Plausibilitätssignal 57 indizieren, dass das Sinussignal 51 und das Kosinussignal 52 nicht plausibel sind, beispielsweise durch die Ausgabe einer logischen Null.

Obwohl die vorliegende Erfindung anhand bevorzugter Ausführungsbeispiele vorstehend beschrieben wurde, ist sie darauf nicht beschränkt, sondern auf vielfältige Art und Weise modifizierbar. Insbesondere lässt sich die Erfindung in mannigfaltiger Weise verändern oder modifizieren, ohne vom Kern der Erfindung abzuweichen.

**Patentansprüche**

1. Vorrichtung zum Plausibilisieren von Signalen eines Drehwinkelgebers (2), mit:

   einer Sinussignal-Bereitstellungseinrichtung (11), welche dazu ausgelegt ist, ein Sinussignal (51) des Drehwinkelgebers (2), welches eine Sinusfunktion eines zeitabhängigen Drehwinkels indiziert, bereitzustellen;
   einer Kosinussignal-Bereitstellungseinrichtung (12), welche dazu ausgelegt ist, ein Kosinussignal (52) des Drehwinkelgebers (2), welches eine Kosinusfunktion eines zeitabhängigen Drehwinkels indiziert, bereitzustellen;
   einer Recheneinrichtung (14), welche dazu ausgelegt ist, ein Berechnungssignal (53) basierend auf einer Summe des Quadrats des bereitgestellten Sinussignals (51) und des Quadrats des bereitgestellten Kosinussignals (52) zu bilden;
   einer Maximalwert-Bestimmungseinrichtung (16), welche dazu ausgelegt ist, einen Maximalwert (54) des Berechnungssignals (53) innerhalb einer Periodendauer des Sinussignals (51) und des Kosinussignals (51) zu bestimmen;
   einer Minimalwert-Bestimmungseinrichtung (18), welche dazu ausgelegt ist, einen Minimalwert (55) des Berechnungssignals (53) innerhalb einer Periodendauer des Sinussignals (51) und des Kosinussignals (51) zu bestimmen;
   einer Bestimmungseinrichtung (20), welche dazu ausgelegt ist, ein Differenzsignal (56) basierend auf einem Betrag einer Differenz zwischen dem bestimmten Maximalwert (54) und dem bestimmten Minimalwert (55) zu bestimmen; und
   einer Plausibilisierungseinrichtung (22), welche dazu ausgelegt ist, das Sinussignal (51) und das Kosinussignal (52) zu plausibilisieren, falls das Differenzsignal (56) innerhalb eines vorbestimmten Bereichs liegt.

2. Verfahren zum Plausibilisieren von Signalen eines Drehwinkelgebers (2), mit den Schritten:

   Bereitstellen (S01) eines Sinussignals (51) des Drehwinkelgebers (2), welches eine Sinusfunktion eines zeitabhängigen Drehwinkels indiziert;
   Bereitstellen (S02) eines Kosinussignals (52) des Drehwinkelgebers (2), welches eine Kosinusfunktion des zeitabhängigen Drehwinkels indiziert;
   Bilden (S03) eines Berechnungssignals (53) basierend auf einer Summe des Quadrats des bereitgestellten Sinussignals (51) und des Quadrats des bereitgestellten Kosinussignals (52);
   Bestimmen (S04) eines Maximalwerts (54) des Berechnungssignals (53) innerhalb einer Periodendauer des Sinussignals (51) und des Kosinussignals (52);
   Bestimmen (S05) eines Minimalwerts (55) des Berechnungssignals (53) innerhalb einer Periodendauer des Sinussignals (51) und des Kosinussignals (52);
   Bestimmen (S06) eines Differenzsignals (56) basierend auf einem Betrag einer Differenz zwischen dem Maximalwert (54) und dem Minimalwert (55); und
   Plausibilisieren (S07) des Sinussignals (51) und des Kosinussignals (52), falls das Differenzsignal (56) innerhalb eines vorbestimmten Bereichs liegt.

**Claims**

1. Device for testing the plausibility of signals of a rotary encoder (2), including:

   a sine signal provision device (11) which is designed to provide a sine signal (51) of the rotary encoder (2) which indicates a sine function of a time-dependent angle of rotation;
   a cosine signal provision device (12) which is designed to provide a cosine signal (52) of the rotary encoder (2) which indicates a cosine function of a time-dependent angle of rotation;
   a computing device (14) which is designed to form a calculation signal (53) based on a sum of the square of the provided sine signal (51) and of the square of the provided cosine signal (52);
   a maximum value determination device (16) which is designed to determine a maximum value (54) of the calculation signal (53) within a period duration of the sine signal (51) and of the cosine signal (51);
   a minimum value determination device (18) which is designed to determine a minimum value (55) of the calculation signal (53) within a period duration of the sine signal (51) and of the cosine signal (51);
   a determination device (20) which is designed to determine a difference signal (56) based on a magnitude of a difference between the determined maximum value (54) and the determined minimum value (55); and
   a plausibility testing device (22) which is designed to test the plausibility of the sine signal (51) and the cosine signal (52), if the difference signal (56) lies within a predetermined range.

2. Method for testing the plausibility of signals of a rotary encoder (2), including the steps of:

   providing (S01) a sine signal (51) of the rotary encoder (2) which indicates a sine function of a time-dependent angle of rotation;
   providing (S02) a cosine signal (52) of the rotary encoder (2) which indicates a cosine function of the time-dependent angle of rotation;
   forming (S03) a calculation signal (53) based on a sum of the square of the provided sine signal (51) and of the square of the provided cosine signal (52);
   determining (S04) a maximum value (54) of the calculation signal (53) within a period duration of the sine signal (51) and of the cosine signal (52);
   determining (S05) a minimum value (55) of the calculation signal (53) within a period duration of the sine signal (51) and of the cosine signal (52);
   determining (S06) a difference signal (56) based on a magnitude of a difference between the maximum value (54) and the minimum value (55); and
   testing the plausibility (S07) of the sine signal (51) and the cosine signal (52) if the difference signal (56) lies within a predetermined range.

**Revendications**

1. Arrangement de contrôle de la plausibilité de signaux d'un transmetteur d'angle de rotation (2), comprenant :

   un dispositif de fourniture de signal sinusoïdal (11) qui est conçu pour fournir un signal sinusoïdal (51) du transmetteur d'angle de rotation (2), lequel indexe une fonction sinusoïdale d'un angle de rotation dépendant du temps ;
   un dispositif de fourniture de signal cosinusoïdal (12) qui est conçu pour fournir un signal cosinusoïdal (52) du transmetteur d'angle de rotation (2), lequel indexe une fonction cosinusoïdale d'un angle de rotation dépendant du temps ;
   un dispositif de calcul (14) qui est conçu pour former un signal calculé (53) en se basant sur une somme du carré du signal sinusoïdal (51) fourni et du carré du signal cosinusoïdal (52) fourni ;
   un dispositif de détermination de valeur maximale (16) qui est conçu pour déterminer une valeur maximale (54) du signal calculé (53) à l'intérieur d'une durée de période du signal sinusoïdal (51) et du signal cosinusoïdal (51) ;
   un dispositif de détermination de valeur minimale (18) qui est conçu pour déterminer une valeur minimale (55) du signal calculé (53) à l'intérieur d'une durée de période du signal sinusoïdal (51) et du signal cosinusoïdal (51) ;
   un dispositif de détermination (20) qui est conçu pour déterminer un signal différentiel (56) basé sur un montant d'une différence entre la valeur maximale (54) déterminée et la valeur minimale (55) déterminée ; et

un dispositif de contrôle de plausibilité (22) qui est conçu pour contrôler la plausibilité du signal sinusoïdal (51) et du signal cosinusoïdal (52) dans le cas où le signal différentiel (56) se trouve à l'intérieur d'une plage prédéterminée.

2. Procédé de contrôle de la plausibilité de signaux d'un transmetteur d'angle de rotation (2), comprenant les étapes suivantes :

fourniture (S01) d'un signal sinusoïdal (51) du transmetteur d'angle de rotation (2), lequel indexe une fonction sinusoïdale d'un angle de rotation dépendant du temps ;

fourniture (S02) d'un signal cosinusoïdal (52) du transmetteur d'angle de rotation (2), lequel indexe une fonction cosinusoïdale d'un angle de rotation dépendant du temps ;

formation (S03) d'un signal calculé (53) en se basant sur une somme du carré du signal sinusoïdal (51) fourni et du carré du signal cosinusoïdal (52) fourni ;

détermination (S04) d'une valeur maximale (54) du signal calculé (53) à l'intérieur d'une durée de période du signal sinusoïdal (51) et du signal cosinusoïdal (52) ;

détermination (S05) d'une valeur minimale (55) du signal calculé (53) à l'intérieur d'une durée de période du signal sinusoïdal (51) et du signal cosinusoïdal (52) ;

détermination (S06) d'un signal différentiel (56) basé sur un montant d'une différence entre la valeur maximale (54) et la valeur minimale (55) ; et

contrôle de la plausibilité (S07) du signal sinusoïdal (51) et du signal cosinusoïdal (52) dans le cas où le signal différentiel (56) se trouve à l'intérieur d'une plage prédéterminée.

## Fig. 1

## Fig. 2

# Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011078583 A1
- DE 102011079116 A1